# EUROPEAN PATENT APPLICATION

(11) **EP 4 123 300 A1**
(43) Date of publication of application: **25.01.2023**
(21) Application number: 21306027.0
(22) Date of filing: 22.07.2021
(51) Int. Cl.: G01N 27/327, G01N 27/414

(54) **SENSOR AND METHOD FOR DETECTION OF AN ANALYTE**

(71) Applicant: Valotec, 94800 Villejuif (FR); Mellisim, 94800 Villejuif (FR)
(72) Inventor: MAURIN, Antoine, 94800 Villejuif (FR); CAPITAO, Dany, 94800 Villejuif (FR); ABREU, Caroline, 94800 Villejuif (FR); LOURME, Jean-Christophe, 94800 Villejuif (FR)
(74) Representative: Icosa

(57) **Abstract**

The present invention relates to a sensor comprising an amperometric set-up and an Organic ElectroChemical Transistor set-up in which the working electrode and the gate electrode are a shared electrode.

## Description

### FIELD OF INVENTION

The present invention relates to the field of sensors for biologic analytes.

### BACKGROUND OF INVENTION

Sensors for biological analytes (or biosensors) rely mostly on optical or electrochemical techniques. Amongst electrochemical techniques, amperometry is the most widely used. While it offers low-cost and easy-to-use solutions, it often suffers from low currents (signal), low signal to noise ratios, and overall limited sensitivities, *i.e.* less than 1 to 10 µA.cm².mg⁻¹.dL. An improvement on sensitivity has been achieved with the use of Organic Electrochemical Transistor (OECT) as biosensors. However, despite their improved sensitivity, OECT have various drawbacks: they possess no stable reference point against which the potentials necessary for the detection of the analyte can be applied and they can rapidly become highly energy-consuming due to the high currents generated.

It would be highly desirable to merge the high-sensitivity properties of OECT with the low energy consumption of amperometry design.

This combination is herein disclosed with a hybrid biosensor.

### SUMMARY

This invention relates to a method of detection of an analyte comprising:
i. providing a sensor comprising
   - an amperometric set-up comprising a working electrode (WE), a reference electrode (RE) and a counter electrode (CE);
   - an Organic ElectroChemical Transistor (OECT) set-up comprising a source electrode (S), a drain electrode (D), a conductive channel between source electrode (S) and drain electrode (D) and a gate electrode (G);
   - a circuitry allowing to select the amperometric set-up and/or the OECT set-up;
ii. measuring analyte concentration with amperometric set-up and/or the OECT set-up;
wherein a first shared electrode (WE-G) is the working electrode (WE) of the amperometric set-up and the gate electrode (G) of the OECT set-up.

In one embodiment, the circuitry is allowing to select the amperometric set-up and the OECT set-up, and step (ii) comprises setting said circuitry to measure analyte concentration with amperometric set-up and the OECT set-up. In one embodiment, the circuitry is allowing to select either the amperometric set-up or the OECT set-up, and step (ii) comprises:
- setting said circuitry to measure analyte concentration with amperometric set-up; and
- if said analyte concentration becomes less than a predetermined or adaptative threshold; changing said circuitry set-up to measure analyte concentration with OECT set-up.

In one embodiment, the analyte to be detected is selected from: glucose, any other diabetes related analytes, lactate, cholesterol, glycated hemoglobin (HbA1c), water or air polluting species, or a mixture thereof. In one embodiment, the first shared electrode (WE-G) comprises a biologic detection layer comprising a biologic recognition element and an organic matrix. In one embodiment, the biologic recognition element is an enzyme such as Glucose oxidase or Lactate oxidase. In one embodiment, a second shared electrode (CE-S) is the counter electrode (CE) of the amperometric set-up and the source electrode (S) of the Organic ElectroChemical Transistor set-up.

The present invention also relates to a sensor for detection of an analyte comprising:
- an amperometric set-up comprising a working electrode (WE), a reference electrode (RE) and a counter electrode (CE);
- an Organic ElectroChemical Transistor (OECT) set-up comprising a source electrode (S), a drain electrode (D), a conductive channel between source electrode (S) and drain electrode (D) and a gate electrode (G);
- a circuitry allowing to select the amperometric set-up and/or the OECT set-up;
wherein a first shared electrode (WE-G) is the working electrode (WE) of the amperometric set-up and the gate electrode (G) of the OECT set-up and a second shared electrode (CE-S) is the counter electrode (CE) of the amperometric set-up and the source electrode (S) of the OECT set-up.

In one embodiment, said circuitry is an arrangement of at least one switch or a controller or said circuitry is included in a potentiostat. In one embodiment, the second shared electrode (CE-S) is a gold electrode. In one embodiment, the conductive channel is poly(3,4-ethylenedioxythiophene) polystyrene sulfonate polymer (PEDOT:PSS). In one embodiment, the first shared electrode (WE-G) is a gold electrode. In one embodiment, the sensor further comprises a substrate, wherein the amperometric set-up and the OECT set-up are located on opposite faces of said substrate.

The present invention also relates to the use of the sensor according to the invention for analyte detection in a biological sample. In one embodiment, the sensor is used for glucose detection in a biological sample selected from human and/or non-human cell suspension, cell cluster suspension, blood, whole blood, surgical blood, platelet rich plasma, interstitial fluid, buffy coat, urine, serum, lymph, fluidified feces, adipose tissue, bone marrow, cerebrospinal fluid, sperm, cord blood, milk, saliva, tissue, egg albumen, seashell mix, or a mixture thereof.

### DEFINITIONS

In the present invention, the following terms have the following meanings:
**"Amperometric set-up"** refers to a device comprising three electrodes: (RE) the reference electrode, (CE) the counter electrode, and (WE) the working electrode. An amperometric set-up is based on the immobilization of an analyte on the working electrode surface, an electric current is generated at the working electrode surface when an oxidation or reduction reaction, directly related to the reaction of the analyte at the surface of said electrode, is produced, and this signal can be correlated with the analyte concentration. The reference electrode acts as a reference in measuring and stabilizing the potential of the working electrode.
**"Analyte"** refers to a substance of interest in an analytical procedure, *i.e.* a substance whose chemical constituents can be identified and measured.
**"Biological analyte"** refers to an analyte being a biological molecule, *i.e.* any of numerous substances that are produced by cells and living organisms. Biological molecules (also called biomolecules) have a wide range of sizes and structures and perform a vast array of functions. The four major types of biomolecules are carbohydrates, lipids, nucleic acids, and proteins.
**"Biosensor"** refers to a sensor detecting a biological analyte.
**"Counter electrode"** refers to one of the three electrodes of an amperometric set-up as defined above.
**"Diabetes related analytes"** refers to analytes allowing the detection and quantification of diabetes markers in a subject.
**"Drain"** or **"Drain electrode"** refers to one of the three electrodes of an OECT set-up as defined below.
**"Gate"** or **"Gate electrode"** refers to one of the three electrodes of an OECT set-up as defined below.
**"Interstitial fluid"** refers to extracellular fluid that surrounds cells in a body. Interstitial fluid is the body fluid between blood vessels and cells, typically consisting of a water solvent containing sugars, salts, fatty acids, amino acids, coenzymes, hormones, neurotransmitters, white blood cells and cell waste-products.
**"Nanoparticle"** refers to a particle of any shape having at least one dimension in the nanometer scale, for instance having at least one dimension ranging from 0.1 nanometer to 1000 nanometers.
**"Organic ElectroChemical Transistor"** or **"OECT"** refers to a device comprising three electrodes: (S) the source or source electrode, (D) the drain or drain electrode, and (G) the gate or gate electrode. In an OECT set-up, the source and drain electrodes are connected by a conductive polymer which acts as a conductive channel; and the channel and the gate electrode are separated by an electrolyte which acts as gate dielectric.
**"Reference electrode"** refers to one of the three electrodes of an amperometric set-up as defined above.
**"Shared electrode"** refers to an electrode shared between the OECT set-up and the amperometric set-up. Herein, a shared electrode will be mentioned as, for example, (WE-G), indicating that said shared electrode is the working electrode (WE) of the amperometric set-up and the gate electrode (G) of the OECT set-up. In this configuration, these electrodes are a same sole electrode, called shared electrode.
**"Source"** or **"Source electrode"** refers to one of the three electrodes of an OECT set-up as defined above.
**"Working electrode"** refers to one of the three electrodes of an amperometric set-up as defined above.

### DETAILED DESCRIPTION

The following detailed description will be better understood when read in conjunction with the drawings. For the purpose of illustrating, the sensor is shown in the preferred embodiments. It should be understood, however that the application is not limited to the precise arrangements, structures, features, embodiments, and aspect shown. The drawings are not drawn to scale and are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

### Method of detection of an analyte

This invention relates to a method of detection of an analyte comprising:
i. providing a sensor comprising
   - an amperometric set-up comprising a working electrode (WE), a reference electrode (RE) and a counter electrode (CE);
   - an Organic ElectroChemical Transistor (OECT) set-up comprising a source electrode (S), a drain electrode (D), a conductive channel between source electrode (S) and drain electrode (D) and a gate electrode (G);
   - a circuitry allowing to select the amperometric set-up and/or the OECT set-up;
ii. measuring analyte concentration with amperometric set-up and/or the OECT set-up;
wherein a first shared electrode (WE-G) is the working electrode (WE) of the amperometric set-up and the gate electrode (G) of the OECT set-up.

In the amperometric set-up, the counter electrode (CE) is configured to close the circuit with the working electrode (WE), and the reference electrode (RE) is configured to provide a stable point of reference against which potentials are applied.

In the OECT set-up, the drain and source electrodes (D and S) are connected by the conductive channel, whose electrical conductivity will change based on the reaction between the analyte and the gate.

Each set-up possesses an electrode configured to interact with an analyte to be detected and to generate a current upon said detection: working electrode for the amperometric set-up and the gate for the OECT set-up. In the sensor of the invention these electrodes are a same sole electrode, called the first shared electrode as it is shared between both set-ups. This allows for a mutualization of the efficiency of both set-ups.

The method of the invention allows for the detection of an analyte in a biological sample, *i.e.* determining if said analyte is present or absent in said sample, and for concentration determination as both amperometry and OECT are quantitative techniques. Indeed, the current generated at the first shared electrode upon detection of the analyte is proportional to the concentration of said analyte in the biological sample.

Both set-ups work independently from one another and can either monitor the analyte concentration in parallel (first and second embodiments), be turned on sequentially (first configuration of third embodiment), or be turned on and off based on a specific signal registered by the other set-up (second configuration of third embodiment).

As explained hereabove, amperometry allows for low energy consumption while suffering from overall limited sensitivities, whereas OECT allows for high sensitivity while suffering from high energy consumption.

In the present method, it is possible to modulate the measurement with the amperometric set-up and the OECT set-up according to the analyte to detect, its concentration and/or at the user request. For example, for short-term measurements, such as for example short episodes of hypoglycemia, or for low analyte concentrations, the OECT set-up may be privileged. For long-term measurements or measurements with constant concentration for a certain period of time, the amperometric set-up may be privileged to save energy. Thus, the OECT set-up may be occasionally used mainly for confirmation purposes.

The sensor of the invention may also be called a biosensor.

According to one embodiment, to operate at the same time, the amperometric set-up and the OECT set-up are galvanically isolated, by means of optical, magnetic, or capacitive connections.

In an alternative embodiment, the amperometric set-up and the OECT set-up are not isolated from each other.

According to one embodiment, the first shared electrode (WE-G) comprises a uniform surface sensitive to an analyte, said surface being connected to the OECT set-up and the amperometric set-up via two independent wires. The circuitry allows to select the amperometric set-up and/or the OECT set-up by blocking charges communication in one of said wires.

The elements of the sensor are described hereafter in "sensor" section.

### First embodiment

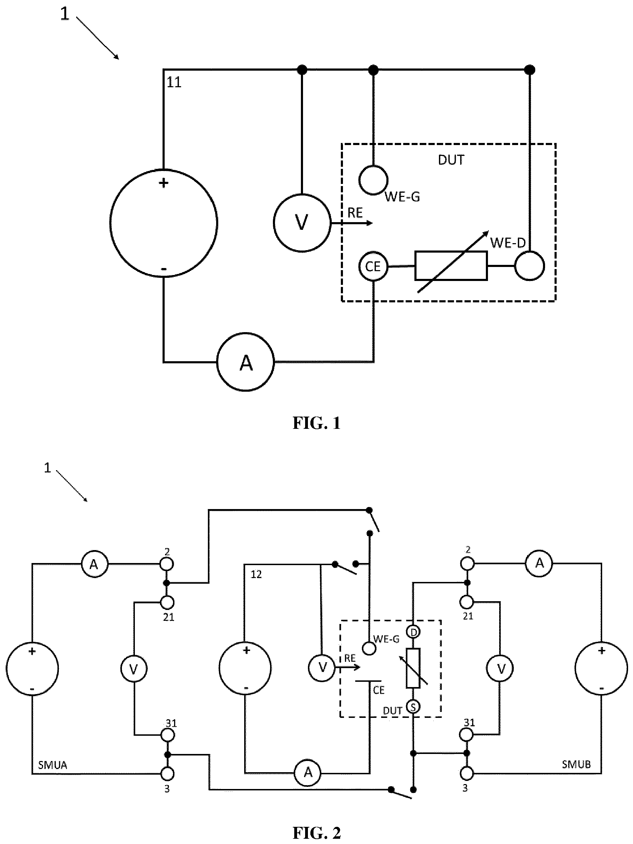

According to a first embodiment illustrated in figure 1, the circuitry is allowing to select the amperometric set-up and the OECT set-up, and step (ii) comprises setting said circuitry to measure analyte concentration with amperometric set-up and the OECT set-up. In this first embodiment, the amperometric set-up and the OECT set-up work in parallel.

In this first embodiment, a second shared electrode (CE-S) is the counter electrode (CE) of the amperometric set-up and the source electrode (S) of the Organic ElectroChemical Transistor set-up.

In this first embodiment, the potentials of the first shared electrode (WE-G) and of the drain electrode (D) are applied against the reference electrode (RE) and are therefore stable. The second shared electrode (CE-S) allows for the channel circuit to be closed.

In this first embodiment, a constant current is applied through the conductive channel and the difference of potential between the drain electrode (D) and the second shared electrode (CE-S) is recorded. When the first shared electrode (WE-G) detects the analyte, an electron transfer occurs and is balanced at the second shared electrode (CE-S), reducing or oxidizing the conductive channel and changing the potential difference between the second shared electrode (CE-S) and drain electrode (D) proportionally to the analyte concentration.

This first embodiment is particularly advantageous as it addresses the lack of reference electrode and stable potential applied to the gate electrode in an OECT set-up. Said OECT set-up combined with an amperometric set-up can then be used as an electrochemical biosensor without concerns. Thus, this embodiment allows an absolute measurement of the analyte concentration.

### Second embodiment

According to a second embodiment, the circuitry is allowing to select the amperometric set-up and the OECT set-up, and step (ii) comprises measuring simultaneously analyte concentration with the amperometric set-up and the OECT set-up. In this embodiment, the amperometric set-up and the OECT set-up are working in parallel. This embodiment is particularly advantageous for calibrating the sensor and ensuring that both the amperometric set-up and the OECT set-up are working properly.

### Third embodiment

According to one embodiment, the circuitry is allowing to select either the amperometric set-up or the OECT set-up, and step (ii) comprises:
- setting said circuitry to measure analyte concentration with amperometric set-up; and
- if said analyte concentration becomes less than a predetermined or adaptative threshold, changing said circuitry set-up to measure analyte concentration with OECT set-up.

During step (ii), the analyte concentration can be first measured using the amperometric set-up, and if said concentration is too low for the sensitivity of the amperometric set-up, *i.e.* below the detection threshold, the circuitry switches from the amperometric set-up to the OECT set-up to measure the analyte concentration. In this embodiment, the detection threshold is 80 mg.dL⁻¹, preferably 70 mg.dL⁻¹, more preferably 50 mg.dL⁻¹.

Thus, the method of the invention allows to merge the high-sensitivity properties of OECT with the low energy consumption of amperometry design.

In a first configuration of this third embodiment illustrated in figure 2, the amperometric set-up and the OECT set-up function sequentially, *i.e.* the circuitry is used to select either one of the set-ups based on the signal registered at the other set-up.

This configuration is advantageous as it allows an easy calibration of the OECT set-up based on the signal coming from the amperometric set-up as they share one detecting electrode.

This configuration also allows to assess malfunction of one of the set-ups quickly and obtain an accurate signal despite said malfunction. For example, if the signal is degraded when measuring the analyte concentration with the amperometric set-up, the circuitry will select the OECT-set-up to obtain an adequate signal.

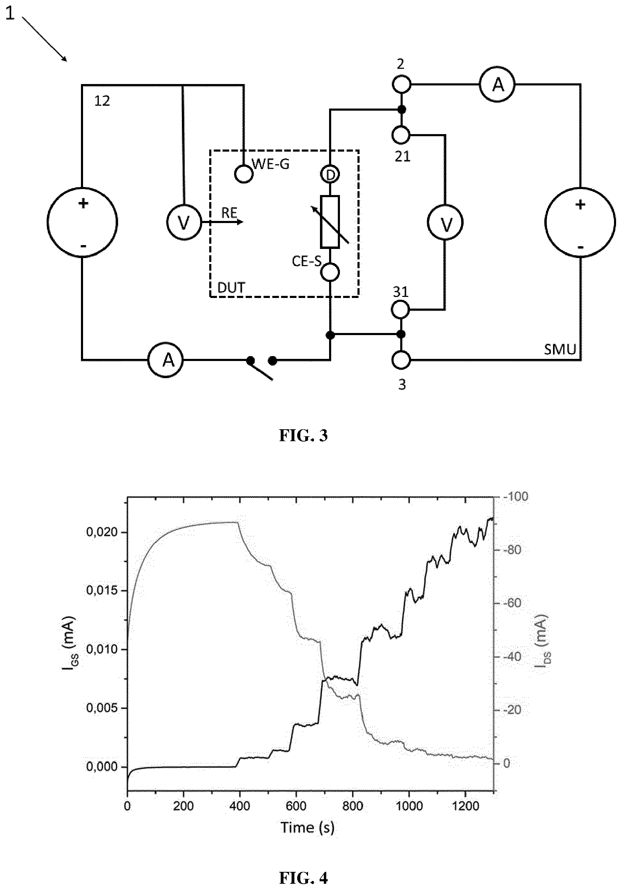

In a second configuration of this third embodiment illustrated in figure 3, a second shared electrode (CE-S) is the counter electrode (CE) of the amperometric set-up and the source electrode (S) of the Organic ElectroChemical Transistor set-up.

In this configuration, first the circuitry selects the amperometric set-up, *i.e.* said set-up is switched on. The amperometric set-up detects the analyte through the first shared electrode (WE-G), and an electron transfer occurs at this electrode, at a controlled potential thanks to the reference electrode (RE). Through classical electrochemical mechanisms, this electron transfer is balanced at the second shared electrode (CE-S). In this configuration, the material of the conductive channel will be reduced at the second shared electrode (CE-S), in a proportion directly related to the quantity of electrons exchanged at the first shared electrode (WE-G). Then, the circuitry selects the OECT set-up, *i.e.* the OECT set-up is switched on while the amperometric set-up is switched off. Thus, the circuit formed by the drain electrode (D), the conductive channel and the second shared electrode (CE-S) is closed, and the current flowing through the conductive channel is recorded. Said current is directly related to the state of oxidation of the material of the conductive channel, which is directly dependent on the quantity of electrons exchanged in the previous step, *i.e.* proportional to the analyte concentration, only amplified compared to the current recorded at the first shared electrode (WE-G), thanks to the inherent conductivity of the material of the conductive channel.

For example with glucose as the analyte, in this configuration, when the amperometric set-up detects a hypoglycemic event, the circuitry selects the OECT set-up. Inversely, when the OECT set-up detects an euglycemia or hyperglycemic event, the circuitry selects the amperometric set-up.

### Analyte

According to one embodiment, the analyte to be detected is selected from: glucose, any other diabetes related analytes, lactate, cholesterol, glycated hemoglobin (HbA1c), water or air polluting species, or a mixture thereof.

According to one embodiment, examples of diabetes related analytes include but are not limited to: insulin, C-peptide, ketones and glycated hemoglobin.

According to one embodiment, examples of water or air polluting species include but are not limited to: bacteria, parasites, noroviruses, viruses, organic pollutants or inorganic pollutants. In this embodiment, *i.e.* when the analyte to be tested is a water or air polluting species; the method of the invention aims at determining the quality of water or air by measuring for example the quantity of oxygen consumed by microorganisms coming from decomposing organic matter (biochemical oxygen demand), or the survival of bacterial colonies in the sample. In this case, the method of the invention does not necessarily target a specific polluting species but aims at determining the general toxicity in a broad sense of the sample.

According to one embodiment, examples of bacteria and parasites include but are not limited to: Burkholderia pseudomallei, Cryptosporidium parvum, Giardia lamblia, Salmonella, parasitic worms including the Schistosoma type.

According to one embodiment, examples of organic pollutants include but are not limited to:
- detergents;
- disinfection by-products found in chemically disinfected drinking water, such as chloroform;
- food processing waste, which can include oxygen-demanding substances, fats and grease;
- insecticides and herbicides, such as organohalides;
- petroleum hydrocarbons, including fuels such as for example gasoline, diesel fuel, jet fuels, and fuel oil, lubricants such as for example motor oil, and fuel combustion byproducts;
- volatile organic compounds, such as industrial solvents;
- chlorinated solvents, *i.e.* dense non-aqueous phase liquids that may fall to the bottom of water reservoirs as they don't mix well with water and are denser than water;
- polychlorinated biphenyl (PCBs);
- trichloroethylene
- perchlorate
- chemical compounds found in personal hygiene and cosmetic products;
- drug pollution involving pharmaceutical drugs and their metabolites, such as for example antidepressant drugs or hormonal medicines such as contraceptive pills, indeed these molecules can be small and difficult for treatment plants to remove without expensive upgrades.

According to one embodiment, examples of inorganic pollutants include but are not limited to:
- inorganic acids, such as inorganic acids resulting from industrial discharges, especially sulfur dioxide;
- ammonia which may result from food processing waste;
- chemical waste as industrial by-products;
- fertilizers containing nutrients such as nitrates and phosphates, which may be found in storm water runoff from agriculture, as well as commercial and residential use;
- heavy metals from motor vehicles, via urban storm water runoff for example, and acid mine drainage;
- secretion of creosote preservative into the aquatic ecosystem;
- silt that may be found in water runoff from construction sites, logging, slash and burn practices or land clearing sites.

### Biological sample

According to one embodiment, the biological sample is a biological fluid selected in the group comprising blood, surgical blood, plasma, buffy coat, urine, serum, lymph, tears, fluidified feces, adipose tissue, bone marrow, cerebrospinal fluid, sperm, cord blood, milk, saliva, tissue, egg albumen, seashell mix, or a mixture thereof.

According to another embodiment, the biological sample is water or air.

### Sensor for detection of an analyte

The present invention also relates to a sensor for detection of an analyte comprising:
- an amperometric set-up comprising a working electrode (WE), a reference electrode (RE) and a counter electrode (CE);
- an Organic ElectroChemical Transistor set-up (OECT) comprising a source electrode (S), a drain electrode (D), a conductive channel between source electrode (S) and drain electrode (D) and a gate electrode (G);
- a circuitry allowing to select the amperometric set-up and/or the OECT set-up;
wherein a first shared electrode (WE-G) is the working electrode (WE) of the amperometric set-up and the gate electrode (G) of the OECT set-up and a second shared electrode (CE-S) is the counter electrode (CE) of the amperometric set-up and the source electrode (S) of the OECT set-up.

The combination of the elements of an amperometric set-up with the elements of an OECT set-up allows taking advantage the strengths of both technologies, *i.e.* low energy consumption for the amperometric set-up and high sensitivity for the OECT set-up, while balancing out their drawbacks, i.e. low sensitivity for the amperometric set-up and high energy consumption for the OECT set-up, resulting in an enhanced electrochemical sensor.

According to one embodiment, the sensor comprises a substrate, preferably a polymeric substrate selected from polyimide, poly(ethylene 2,6-naphthalate (PEN), Polyethylene terephthalate (PET), more preferably a polyimide substrate. Preferably, the amperometric set-up and the OECT set-up are located on opposite faces of said substrate.

According to one embodiment, said circuitry is an arrangement of at least one switch or a controller or said circuitry is included in a potentiostat.

According to one embodiment, the first shared electrode (WE-G) comprises a biologic detection layer forming the analyte sensitive surface.

According to one embodiment, the analyte sensitive surface, *i.e.* surface dedicated to detection of an analyte, ranges from 0.01 mm² to 10 mm².

According to an embodiment, the biologic detection layer is a composite material comprising a biologic recognition element and an organic matrix. In particular, the organic matrix of the biologic detection layer is selected from a polymer and an allotrope of carbon, preferably organic matrix of the biologic detection is selected from polysaccharides derivatives such as chitosan derivatives or cellulose acetate derivatives, chitosan derivatives, in particular a partially deacetylated chitin, carbon nanotubes, graphene and carbon powder, more preferably organic matrix of the biologic detection is selected from polyvinylpyridine or polyvinylpyridine derivatives.

In a preferred embodiment, biologic recognition element is an enzyme, in particular Glucose oxidase or Lactate oxidase.

Preferably, the biologic detection layer comprises an enzyme as the biologic recognition element, preferably Glucose Oxidase, and an organic matrix, preferably a derivative of polyvinylpyridine.

According to one embodiment, the first shared electrode (WE-G) further comprises a catalytic layer deposited partially or totally on the surface of said electrode, and located between the electrode and the biologic detection layer. Direct contact of the catalytic layer and said electrode preferably limits noise and artefacts in signal.

In a specific configuration of this embodiment, the catalytic layer is a composite material comprising noble metal nanoparticles included in an organic matrix. Noble metal nanoparticles are preferably platinum nanoparticles, and organic matrix is preferably a conductive polymer or a conductive allotrope of carbon. Platinum nanoparticles are indeed very efficient in oxydo-reduction processes, hence enabling electron transfer from an analyte to be detected by the sensor. Said nanoparticles may be functionalized to enhance compatibility with other materials. This configuration allows building a catalytic layer with large dimensions, at least with a thickness much larger than a layer of nanoparticles. Such thick material presents an increased contact surface for nanoparticles with sample under study, and allow to engage more nanoparticles in the sensor. An improved sensibility is obtained.

Preferably, the catalytic layer comprises a mixture of 0.2%wt-0.5wt% platinum nanoparticles and PEDOT:PSS and/or has a thickness ranging from 1 to 10 µm, preferably from 1 to 5 µm, more preferably of 3 µm.

Preferably, the catalytic layer is in direct contact with the first shared electrode (WE-G) and comprises noble metal nanoparticles, preferably platinum nanoparticles grafted with thiophenol derivatives, and an organic conductive matrix, preferably an organic conductive polymer, more preferably poly(3,4-ethylenedioxythiophene) polystyrene sulfonate polymer (PEDOT:PSS).

In a preferred embodiment, the biologic detection layer is in direct contact with the catalytic layer and may be on a part of the catalytic layer, *i.e.* biologic detection layer may not cover the whole surface of catalytic layer. In a more preferred embodiment, biologic detection layer is in direct contact with the catalytic layer, which is also in direct contact with first shared electrode (WE-G). The function of biologic recognition element is to react with the biologic analyte of interest, thus producing an electrochemically active compound. The later may interact with noble metal nanoparticles as catalyst to be reduced, thus generating an electric charge finally detected.

In a specific embodiment using Glucose oxidase as biologic recognition element and platinum nanoparticles in PEDOT:PSS as catalytic layer, Glucose oxidase reacts with glucose from sample and produces hydrogen peroxide H₂O₂. Hydrogen peroxide is oxidized in presence of platinum nanoparticles and reduces charge density in catalytic layer, yielding a variation of potential in the first shared electrode (WE-G) and a signal in the amperometric set-up and/or the OECT set-up.

Alternatively, enzyme used as biologic recognition element is Lactate oxidase. Lactate oxidase reacts with lactate from sample and produces pyruvate and hydrogen peroxide H₂O₂. Hydrogen peroxide is then oxidized in presence of platinum nanoparticles, yielding a signal in the amperometric set-up and/or the OECT set-up.

According to one embodiment, the first shared electrode (WE-G) further comprises a combined catalytic and biological layer deposited partially or totally on the surface of said electrode. Direct contact of the combined catalytic and biological layer and said electrode preferably limits noise and artefacts in signal.

In a specific configuration of this embodiment, the composite catalytic and biological layer is a composite material comprising an electrochemically active constituent (a mediator) covalently attached to an organic matrix. The electrochemically active constituent is preferably a derivative of ferrocene, and organic matrix is preferably a nitrogen-containing polymer. Ferrocene derivatives are indeed very efficient in enzymatic mediation processes, hence enabling electron transfer from an analyte to be detected by the sensor. Said ferrocene derivatives may be functionalized to enhance compatibility with the enzyme. The organic matrix is further modified by inclusion of an enzyme, preferably Glucose Oxidase, to allow for the detection of Glucose.

According to one embodiment, the conductive channel is a conductive polymer, more preferably the conductive channel is poly(3,4-ethylenedioxythiophene) polystyrene sulfonate polymer (PEDOT:PSS).

According to one embodiment, electrodes are metallic, especially gold (Au), Silver (Ag) or platinum (Pt); or conductive allotrope of carbon, especially graphene, carbon nanotubes or pure carbon particles.

In a preferred configuration of this embodiment, the first shared electrode (WE-G) is a gold electrode.

In a preferred configuration of this embodiment, the second shared electrode (CE-S) is a gold electrode.

In a preferred configuration of this embodiment, the drain electrode (D) is a gold electrode.

In a preferred configuration of this embodiment, the reference electrode (RE) is a gold electrode, preferably a gold electrode covered with a silver/silver chloride (Ag/AgCl) layer.

According to one embodiment, the sensor further comprises an energy source to supply both the amperometric set-up and the OECT set-up.

In a specific configuration of this embodiment, the energy source is selected from a battery, a generator, a plug-in.

In an alternative configuration of this embodiment, the sensor is self-powered, *i.e.* the energy is provided by the interaction between the analyte and the sensor. In this embodiment, the electrons produced during the redox (reduction-oxidation) taking place at the surface of the first shared electrode (WE-G) are used for recharging the sensor.

In a preferred embodiment, the sensor comprises:
- a substrate made of PET, PEN or polyimide, preferably polyimide;
- an amperometric set-up comprising a working electrode (WE), a reference electrode (RE) and a counter electrode (CE), said working and counter electrodes being gold electrodes, said reference electrode being a silver/silver chloride electrode;
- an Organic ElectroChemical Transistor set-up (OECT) comprising a source electrode (S), a drain electrode (D), a conductive channel between source electrode (S) and drain electrode (D) and a gate electrode (G), said electrodes being gold electrodes, said conductive channel being PEDOT:PSS;
- a circuitry allowing to select the amperometric set-up and/or the OECT set-up, said circuitry being potentiostat, bipotentiostat, SMU or combination thereof;
- wherein the surface dedicated to detection of an analyte is ranging from 0.01 mm² and 10 mm²;
wherein a first shared electrode (WE-G) is the working electrode (WE) of the amperometric set-up and the gate electrode (G) of the OECT set-up and a second shared electrode (CE-S) is the counter electrode (CE) of the amperometric set-up and the source electrode (S) of the OECT set-up.

According to one embodiment illustrated in figure 1, the sensor comprises:
- an amperometric set-up comprising a working electrode (WE), a reference electrode (RE) and a counter electrode (CE);
- an Organic ElectroChemical Transistor set-up (OECT) comprising a source electrode (S), a drain electrode (D), a conductive channel between source electrode (S) and drain electrode (D) and a gate electrode (G);
- a circuitry allowing to select the amperometric set-up and/or the OECT set-up;

wherein a first shared electrode (WE-G) is a working electrode (WE) of the amperometric set-up and the gate electrode (G) of the OECT set-up;
wherein a second shared electrode (CE-S) is the counter electrode (CE) of the amperometric set-up and the source electrode (S) of the OECT set-up;
wherein the drain electrode (D) is used as a second working electrode of the amperometric set-up forming a third shared electrode (WE-D).

According to one embodiment illustrated in figure 3, the sensor comprises:
- an amperometric set-up comprising a working electrode (WE), a reference electrode (RE) and a counter electrode (CE);
- an Organic ElectroChemical Transistor set-up (OECT) comprising a source electrode (S), a drain electrode (D), a conductive channel between source electrode (S) and drain electrode (D) and a gate electrode (G);
- a circuitry allowing to select the amperometric set-up and/or the OECT set-up;
wherein a first shared electrode (WE-G) is the working electrode (WE) of the amperometric set-up and the gate electrode (G) of the OECT set-up and a second shared electrode (CE-S) is the counter electrode (CE) of the amperometric set-up and the source electrode (S) of the OECT set-up.

### Use of the sensor according to the invention

The present invention also relates to the use of the sensor according to the invention for analyte detection in a biological sample.

According to one embodiment, the sensor of the present invention is used for detection of glucose, any other diabetes related analytes, lactate, cholesterol, glycated hemoglobin (HbA1c) or a mixture thereof.

According to one embodiment, the sensor of the present invention is used for detection of air or water polluting species as disclosed herein.

According to one embodiment, the sensor of the present invention is used for glucose detection in a biological sample selected from human and/or non-human cell suspension, cell cluster suspension, blood, whole blood, surgical blood, platelet rich plasma, interstitial fluid, buffy coat, urine, serum, lymph, fluidified feces, adipose tissue, bone marrow, cerebrospinal fluid, sperm, cord blood, milk, saliva, tissue, egg albumen, seashell mix, or a mixture thereof, preferably the sensor of the present invention is used for glucose detection in blood.

### BRIEF DESCRIPTION OF THE DRAWINGS

**Figure 1** is an electrical diagram of the sensor according to the first embodiment of the invention.
**Figure 2** is an electrical diagram of the sensor according to the first configuration of the third embodiment of the invention.
**Figure 3** is an electrical diagram of the sensor according to the second configuration of the third embodiment of the invention.
**Figure 4** shows the current at the gate (IG, black curve) and between the source and the drain (I_{D}, grey curve) measured against time.
**Figure 5** shows the current circulating at the working electrode, I_{w}, depending on analyte concentration.
**Figure 6** shows the current circulating through the channel, I_{D}, depending on analyte concentration.

### EXAMPLES

The present invention is further illustrated by the following examples.

### Example 1: Preparation of a sensor S1 according to the first embodiment and the second configuration of the third embodiment

A polyimide substrate is cut to appropriate dimensions and cleaned by successive washing with acetone, water and isopropanol, then dried and heated for 60 minutes at 180°C.

A shadow mask is prepared according to the desired geometry of the electrodes and applied on the polyimide substrate. Then a layer of gold is deposited by physical vapor deposition to form drain, source, gate and reference electrodes. A 200 nm thick layer of gold is obtained.

A PEDOT:PSS layer is deposited by inkjet printing on source electrode, drain electrode and between these electrodes so as to form a conductive channel. The channel is thermally cured at 120°C for 60 minutes to obtain adequate conductive properties.

A mixture of 0.2 %wt platinum nanoparticles (described in WO2021/058589) and PEDOT:PSS is prepared and ink-jetted on part of the gate electrode, yielding a catalytic layer of thickness 3 µm.

A silver/silver chloride (Ag/AgCl) ink is deposited on part of the reference electrode and thermally cured at 120°C for 15 minutes, yielding an Ag/AgCl reference electrode.

A solution comprising 4 mg.mL⁻¹ poly-(4-vinylpyridine), 4 mg.mL⁻¹ Glucose Oxidase, and 0.4 mg.mL⁻¹ poly(ethyleneglycol)diglycidyl ether in 0.04 mol.L⁻¹ acetic acid is deposited by drop-casting on top of the catalytic layer. The electrodes are left to dry under H₂O-saturated atmosphere for 24 hours.

Sensors S1, corresponding to the first embodiment (S1') and the second configuration of the third embodiment (S1") herein, is thus obtained, as shown schematically on figures 1 and 3 respectively.

### Example 2: Preparation of a sensor S2 according to the first configuration of the third embodiment

A sensor S2 identical to the sensor of example 1 is prepared and a fifth gold electrode is deposited at one extremity of the polyimide substrate, forming the counter-electrode of the amperometric setup.

This sensor S2 is schematically shown on figure 2.

### Example 3: Operation of sensor S1' (bipotentiostat configuration)

Sensor S1' is connected to a classical bipotentiostat, as follows:
- the gate electrode is connected to the Working Electrode 1 channel of the bipotentiostat,
- the drain electrode is connected to the Working Electrode 2 channel of the bipotentiostat,
- the source electrode is connected to the Counter Electrode channel of the bipotentiostat,
- the reference electrode is connected to the Reference Electrode channel of the bipotentiostat.

Sensor S1' is immersed in a Phosphate Buffered Saline solution (0.01 M, pH 7.4).

The potentials of the gate (E_{G}) and the drain (E_{D}) are applied against the reference electrode. E_{G} = + 0.5 V vs Ref. and E_{D} = - 0.6 V vs Ref.

Controlled quantities of glucose solutions of known concentrations are added to the study medium, to gradually increase the concentration of analyte in said medium.

The current at the gate (IG) and between the source and the drain (I_{D}) are measured against time, and then reported as a function of glucose concentration (see Figure 4).

### Example 4: Operation of sensor S1" (sequential operation)

Sensor S1" is connected to a classical potentiostat, as follows:
- the working electrode is connected to the Working Electrode channel of the potentiostat;
- the shared counter/source electrode is connected to the Counter Electrode channel of the potentiostat;
- the reference electrode is connected to the Reference Electrode channel of the potentiostat.

Furthermore, sensor S1" is connected to a source measure unit (SMU), as follows:
- the shared counter/source electrode is connected to the LO channel of the SMU
- the drain electrode is connected to the HI channel of the SMU.

Sensor S1" is immersed in a Phosphate Buffered Saline solution (0.01 M, pH 7.4).

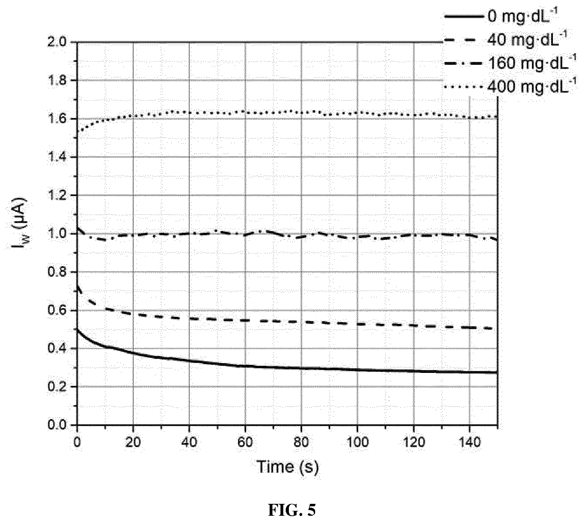

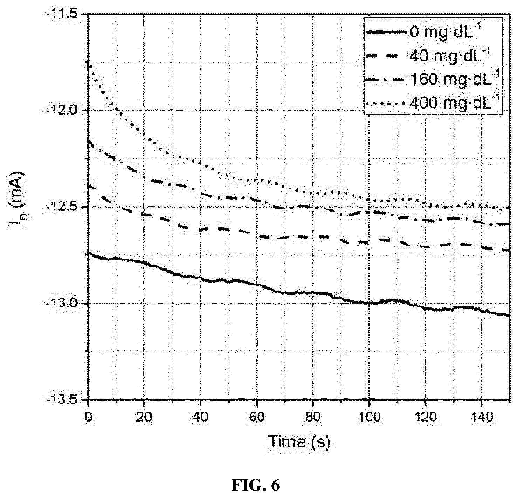

The following steps are performed
a) On the potentiostat, the electrochemical potential of the working electrode is set to + 0.45 V vs the reference electrode. The electrochemical setup of sensor S1" turned ON for a set duration.
b) The current at the working electrode, Iw, is measured against time (see Figure 5).
c) Sensor S1" is turned OFF.
d) On the SMU, the tension at the drain is set to V_{D} = - 0.6 V. The channel setup of sensor S1" is turned ON for a set duration.
e) The current circulating through the channel, I_{D}, is measured against time (see Figure 6).
f) Sensor S1" is turned OFF.

Steps a)-f) are repeated for increasing concentrations of analyte (glucose) added to the study medium.

I_{D} and Iw are reported against analyte concentration to obtain calibration curves.

I_{D} and Iw calibration curves show detection set-ups in different current domains. Thus, measure of analyte concentration may be performed using a low current, thus low energy consumption, or a higher current when higher sensitivity is needed. Combination of the OECT set-up and amperometric set-up allows for modulation of the energy used for a measure depending of the sensitivity needed to detect the analyte in the sample.

### REFERENCE

1 - Sensor
11 - Bipotentiostat
12 - Potentiostat
2-HI
21 - HI Sense
3-LO
31 - LO Sense
WE - working electrode
RE - reference electrode
CE - counter electrode
S - source electrode
D - drain electrode
G - gate electrode
SMU - source measure unit
SMUA - first source measure unit
SMUB - second source measure unit

## Claims

1. A method of detection of an analyte comprising
i. Providing a sensor comprising
• an amperometric set-up comprising a working electrode (WE), a reference electrode (RE) and a counter electrode (CE);
• an Organic ElectroChemical Transistor (OECT) set-up comprising a source electrode (S), a drain electrode (D), a conductive channel between source electrode (S) and drain electrode (D) and a gate electrode (G);
• a circuitry allowing to select the amperometric set-up and/or the OECT set-up;
ii. measuring analyte concentration with amperometric set-up and/or the OECT set-up;
wherein a first shared electrode (WE-G) is the working electrode (WE) of the amperometric set-up and the gate electrode (G) of the OECT set-up.

2. The method of detection according to claim **1,** wherein the circuitry is allowing to select the amperometric set-up and the OECT set-up, and step (ii) comprises setting said circuitry to measure analyte concentration with amperometric set-up and the OECT set-up.

3. The method of detection according to claim **1,** wherein the circuitry is allowing to select either the amperometric set-up or the OECT set-up, and step (ii) comprises:
• setting said circuitry to measure analyte concentration with amperometric set-up; and
• if said analyte concentration becomes less than a predetermined or adaptative threshold, changing said circuitry set-up to measure analyte concentration with OECT set-up.

4. The method of detection according to any one of claims **1** to **3,** wherein analyte to be detected is selected from: glucose, any other diabetes related analytes, lactate, cholesterol, glycated hemoglobin, water or air polluting species, or a mixture thereof.

5. The method of detection according to any one of claims **1** to **4,** wherein the first shared electrode (WE-G) comprises a biologic detection layer comprising a biologic recognition element and an organic matrix.

6. The method of detection according to claim **5,** wherein the biologic recognition element is an enzyme such as Glucose oxidase or Lactate oxidase.

7. The method of detection according to any one of claims **1** to **6,** wherein a second shared electrode (CE-S) is the counter electrode (CE) of the amperometric set-up and the source electrode (S) of the Organic ElectroChemical Transistor set-up.

8. A sensor for detection of an analyte comprising:
• an amperometric set-up comprising a working electrode (WE), a reference electrode (RE) and a counter electrode (CE);
• an Organic ElectroChemical Transistor (OECT) set-up comprising a source electrode (S), a drain electrode (D), a conductive channel between source electrode (S) and drain electrode (D) and a gate electrode (G);
• a circuitry allowing to select the amperometric set-up and/or the OECT set-up;
wherein a first shared electrode (WE-G) is the working electrode (WE) of the amperometric set-up and the gate electrode (G) of the OECT set-up and a second shared electrode (CE-S) is the counter electrode (CE) of the amperometric set-up and the source electrode (S) of the OECT set-up.

9. A sensor according to claim **8,** wherein said circuitry is an arrangement of at least one switch or a controller or said circuitry is included in a potentiostat.

10. A sensor according to any one of claim **8** or **9,** wherein the second shared electrode (CE-S) is a gold electrode.

11. A sensor according to any one of claims **8** to **10,** wherein the conductive channel is poly(3,4-ethylenedioxythiophene) polystyrene sulfonate polymer.

12. A sensor according to any one of claims **8** to **11,** wherein the first shared electrode (WE-G) is a gold electrode.

13. A sensor according to any one of claims **8** to **12,** further comprising a substrate, wherein the amperometric set-up and the OECT set-up are located on opposite faces of said substrate.

14. Use of the sensor according to any one of claims **8** to **13** for analyte detection in a biological sample.

15. Use of the sensor according to claim **14** for glucose detection in a biological sample selected from human and/or non-human cell suspension, cell cluster suspension, blood, whole blood, surgical blood, platelet rich plasma, interstitial fluid, buffy coat, urine, serum, lymph, fluidified feces, adipose tissue, bone marrow, cerebrospinal fluid, sperm, cord blood, milk, saliva, tissue, egg albumen, seashell mix, or a mixture thereof.
